# FASCICULE DE BREVET EUROPEEN

(11) **EP 3 650 741 B1**
(45) Date de publication et mention de la délivrance du brevet: **14.04.2021**
(21) Numéro de dépôt: 19202157.4
(22) Date de dépôt: 09.10.2019
(51) Int. Cl.: F17C 6/00

(54) **PROCÉDÉ ET INSTALLATION DE STOCKAGE ET DE DISTRIBUTION D'HYDROGÈNE LIQUÉFIÉ**
VERFAHREN UND VORRICHTUNG ZUR LAGERUNG UND VERSORGUNG MIT VERFLÜSSIGTEM WASSERSTOFF
METHOD AND DEVICE FOR STORAGE AND SUPPLY OF LIQUEFIED HYDROGEN

(30) Priorité: 12.11.2018 FR 1860429
(43) Date de publication de la demande: 13.05.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Bernhardt, Jean-Marc, 38360 Sassenage (FR); Lagoutte, Francois, 38360 Sassenage (FR)
(74) Mandataire: Air Liquide

(56) Documents cités:
- DE-A1-102010 047 300
- FR-A1- 3 061 533
- US-A1- 2008 178 612

## Description

L'invention concerne un procédé et installation de stockage et de distribution d'hydrogène liquéfié.

DE 102010 047300 A1 divulgue une telle installation.

L'invention concerne plus particulièrement une installation de stockage et de distribution d'hydrogène liquéfié comprenant une source d'hydrogène gazeux, un liquéfacteur.

Du fait de sa densité notamment, l'hydrogène liquide est privilégié par rapport à l'hydrogène gazeux lorsque de grandes quantités de produit doivent être transportées sur de grandes distances.

Un autre avantage de l'hydrogène liquide est lié à sa densité et la grande capacité de stockage dans une station-service d'hydrogène pour véhicule pile à combustible. Une température de 20K élimine de facto toutes les impuretés (solides à cette température) du gaz, ce qui optimise le fonctionnement des piles à combustible.

En revanche, du fait de la faible densité de l'hydrogène liquide (70g/litre) comparativement à l'eau, la pression disponible par hauteur hydrostatique et la basse température peuvent engendrer des pertes par évaporation assez importantes lors des transferts de liquide.

En effet, les systèmes de chargement de camions et les réservoirs dans les usines de liquéfaction de l'hydrogène peuvent engendrer des pertes pouvant aller jusqu'à 15 % de la production (par exemple 0.2% de perte du réservoir, 5% de perte due au « flash » dans la vanne de remplissage du réservoir et 10% de perte dans les procédés de remplissage des camions). Ces pertes peuvent produire également lors du remplissage de conteneurs (iso-conteneurs notamment), réservoirs de bateaux ou autre (autres applications auxquelles l'invention peut également s'appliquer).

Ces pertes par évaporation peuvent bien sûr être récupérées, réchauffées, comprimées après stockage et réinjectées dans le liquéfacteur. L'hydrogène est produit à partir d'une source d'hydrogène gazeux qui est liquéfié dans un liquéfacteur avant son transfert dans le stockage. Le gaz de vaporisation (« boil-off ») peut être prélevé dans une unité comprenant par exemple, en série, un réchauffeur, un réservoir tampon (par exemple isobare), un organe de compression. Le gaz récupéré et comprimé peut être admis à l'entrée du liquéfacteur en vue de sa reliquéfaction et réintroduction dans le stockage.

Les réservoirs de camion qui arrivent au remplissage ont généralement une température élevée et une pression élevée. Une partie de ce gaz chaud sous pression peut être évacué vers le stockage de liquide qui sert au remplissage. Cependant, une partie de la dépressurisation du réservoir ne peut pas être effectuée vers le stockage liquide car la pression du camion peut devenir inférieure à celle du stockage. L'hydrogène sous pression en excès est donc perdu ou envoyé à un système de récupération.

Lors d'un arrêt du liquéfacteur ou de la source d'hydrogène qui l'alimente, les stockages liquides doivent permettre de continuer à fournir l'hydrogène liquide aux utilisateurs.

De plus, le froid présent dans les stockages ne permet pas de compenser tous les apports de chaleurs apporté par les opérations de remplissage des réservoirs. Cela peut générer une augmentation de la pression des stockages et une perte d'hydrogène.

Ces solutions génèrent donc des pertes de produit (rejet à l'air) ou nécessitent de dimensionner le liquéfacteur et l'unité de récupération de gaz pour pouvoir absorber les gaz de vaporisation produits lors des remplissages de camions.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce qu'elle comprend deux stockages d'hydrogène liquide à des pressions de stockage respectives déterminées, le liquéfacteur comprenant une entrée raccordée à la source et une sortie raccordée en parallèle, via un ensemble de vanne, à une entrée respective de chaque stockages, la sortie du liquéfacteur étant raccordée également à une extrémité de raccordement destinée à être raccordée de façon amovible à un réservoir à remplir, chaque stockage comprenant une conduite de soutirage de liquide respective comprenant une extrémité raccordée au stockage et au moins une autre extrémité destinée à être raccordée à un au moins un réservoir à remplir, chaque stockage comprenant en outre une conduite de soutirage de gaz respective comprenant une extrémité raccordée au stockage et une autre extrémité raccordée à une entrée du liquéfacteur via un ensemble de vannes configuré pour permettre le recyclage de gaz vers le liquéfacteur en vue d'une liquéfaction.

Selon des particularités possibles :
- les deux stockages d'hydrogène liquide sont maintenus à des pressions de stockage respectives déterminées distinctes,
- l'installation comprend un second liquéfacteur comprenant une entrée raccordée à la source et une sortie raccordée en parallèle, via un ensemble de vanne à une entrée respective de chaque stockage.

L'invention concerne également un procédé remplissage d'un réservoir d'hydrogène liquide, notamment un réservoir mobile d'une semi-remorque, au moyen d'une installation conforme à l'une quelconque des caractéristique ci-dessus ou ci-dessous et comportant une étape préliminaire de dépressurisation du réservoir à remplir à une pression inférieure à la pression du stockage ayant la pression la plus élevée parmi les deux stockages.

L'invention permet de différencier la pression des deux stockages. Ceci permet l'utilisation de la différence de pression d'un stockage à l'autre comme force motrice de l'hydrogène afin de transférer du fluide dans le liquéfacteur et d'apporter assez de froid pour ces opérations de chargement de réservoirs en perdant moins d'hydrogène.

Par ailleurs, des modes de réalisation de l'invention peuvent comporter l'une ou plusieurs des caractéristiques suivantes :
- l'étape préliminaire de dépressurisation comprend un transfert d'une première quantité d'hydrogène liquide dans le réservoir directement à partir du liquéfacteur,
- l'étape préliminaire de dépressurisation comprend un transfert de gaz sous pression du réservoir vers une entrée du liquéfacteur et/ou vers une entrée de l'un au moins des stockages,
- le procédé comprend, simultanément à l'étape préliminaire de dépressurisation, une étape de transfert d'hydrogène liquide dans l'un au moins des stockages à partir du liquéfacteur,
- le procédé comprend une première étape de remplissage comprenant un transfert d'hydrogène liquide dans le réservoir par différentiel de pression à partir du stockage ayant la pression la plus élevée parmi les deux stockages,
- le procédé comprend, simultanément à la première étape de remplissage, une étape de transfert d'hydrogène gazeux du réservoir vers une entrée du liquéfacteur et sa liquéfaction,
- le procédé comprend, simultanément à la première étape de remplissage, une étape de transfert d'hydrogène liquide à partir du liquéfacteur dans le stockage ayant la pression la moins élevée parmi les deux stockages,
- le procédé comprend, après la première étape de remplissage, une étape de dépressurisation du réservoir à la pression du stockage ayant la pression la moins élevée parmi les deux stockages, l'étape de dépressurisation comprenant un équilibrage de pression entre le réservoir et ledit stockage ayant la pression la moins élevée parmi les deux stockages,
- le procédé comprend, simultanément à l'étape de dépressurisation du réservoir à la pression du stockage ayant la pression la moins élevée parmi les deux stockages, une étape de transfert d'hydrogène liquide du liquéfacteur vers ledit stockage ayant la pression la moins élevée parmi les deux stockages,
- le procédé comprend, après l'étape de dépressurisation du réservoir à la pression du stockage ayant la pression la moins élevée parmi les deux stockages, une étape de dépressurisation supplémentaire du réservoir à une pression inférieure à la pression ladite moins élevée parmi les deux stockages, l'étape de dépressurisation supplémentaire comprenant un transfert de gaz du réservoir vers une entrée du liquéfacteur et/ou une évacuation vers l'atmosphère et/ou un organe de collecte de gaz,
- le procédé utilise deux liquéfacteurs distincts,
- un premier stockages d'hydrogène liquide est maintenu à une première pression comprise entre et 1,5 et 11bar absolu et notamment entre 2 et 3bar absolu, de préférence 2,5bar absolu,
- un second stockages d'hydrogène liquide est maintenu à une seconde pression comprise entre et 0,8 et 2,3 bar absolu et notamment entre 1 et 2bar absolu, de préférence 1,5bar absolu,
- avant l'étape de transfert d'une première quantité d'hydrogène liquide dans le réservoir, ledit réservoir est à une pression supérieure ou égale à la pression du stockage ayant la pression la plus élevée parmi les deux stockages, notamment le réservoir est à une pression de 3 à 11 bar, notamment 8bar, et, à l'issue de l'étape de transfert d'une première quantité d'hydrogène liquide dans le réservoir, la pression dans le réservoir est abaissée un une pression inférieure à la pression du stockage ayant la pression la plus élevée parmi les deux stockages, notamment inférieure de quelques millibars à cette pression,

D'autres particularités et avantages apparaîtront à la lecture de la description ci-après, faite en référence aux figures dans lesquelles :
- la figure 1 représente un vue schématique et partielle illustrant la structure et le fonctionnement d'une installation selon un exemple de réalisation possible de l'invention,
- les figures 2 à 7 représentent des vues schématiques et partielles illustrant différentes étapes de fonctionnement possibles de l'installation de la figure 1 lors d'un remplissage de réservoir,
- la figure 8 représente un vue schématique et partielle illustrant la structure et le fonctionnement d'une installation selon un autre exemple de réalisation possible de l'invention.

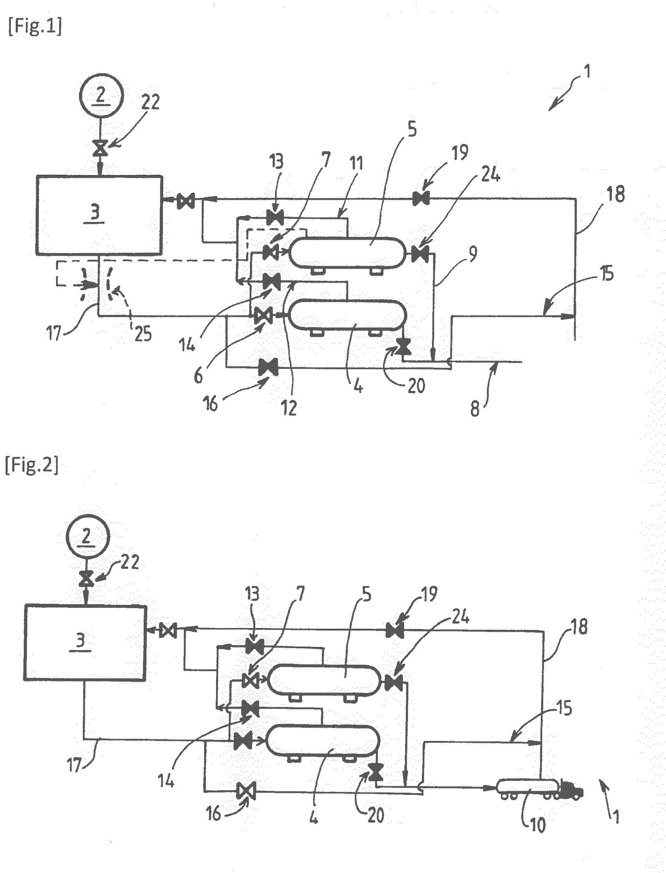

L'installation de stockage et de distribution d'hydrogène liquéfié représenté à la figure 1 comprend une source 2 d'hydrogène gazeux, un liquéfacteur 3 et deux stockages 4, 5 d'hydrogène liquide.

Le liquéfacteur 3 comprend une entrée raccordée à la source 2 (par exemple via au moins une vanne 22).

La source 2 peut être un réseau d'hydrogène et/ou une unité de production d'hydrogène (par exemple vapo-reformage et/ou par électrolyse ou toute autre source appropriée). L'hydrogène gazeux fourni par la source peut avoir une pression par exemple comprise entre 10 et 80 bar.

Le liquéfacteur 3 comprend une sortie raccordée en parallèle, via un ensemble de vanne 7, 6, 16, à des entrées respectives des deux stockages 5, 4 et raccordée également à une troisième extrémité 15 de raccordement amovible à un réservoir 10 à remplir (pour un transfert direct du liquéfacteur 3 vers le réservoir 10).

Les stockages 4, 5 d'hydrogène liquide sont configurés pour stocker le liquide à des pressions respectives déterminées.

Ces stockages 4, 5 sont par exemple des stockages isolés sous vide de grande capacité, par exemple de plusieurs milliers de litres. Ces stockages 4, 5 contiennent classiquement une phase liquide avec une phase vapeur.

Classiquement, la pression de stockage y est de préférence régulée, par exemple à une valeur fixe (par exemple entre 1,05 et 11 bar, par exemple entre 1,1 et 1,8 bar, notamment 1,5 bar absolu pour l'un 5 des stockages et par exemple entre 1,9 et 3 bar, notamment 2,5 bar pour l'autre 4 stockage.

Par « pression de stockage » on entend par exemple la pression moyenne dans le stockage ou en partie basse du stockage ou en partie supérieure (dans le ciel gazeux). En effet, du fait de la faible densité de l'hydrogène, la pression dans la partie inférieure du stockage est sensiblement égale à la pression en partie supérieure.

L'hydrogène fourni par la source 2 et liquéfié par le liquéfacteur 3 peut être transféré dans les stockages 4, 5 de façon intermittente et/ou en continu et/ou en cas de baisse du niveau de liquide dans les réservoir 4, 5 en dessous d'un seuil déterminé. De préférence, le niveau de liquide dans les stockages 4, 5 est contrôlé automatiquement via l'approvisionnement de la part du liquéfacteur 3 (débit du liquéfacteur 3 et/ou vanne de régulation du débit de liquide fourni aux stockages 4, 5).

Chaque stockage 5, 4 comprend une conduite 9, 8 de soutirage de liquide respective comprenant une extrémité raccordée au stockage 4, 5 (généralement en partie basse) et au moins une autre extrémité destinée à être raccordée à un au moins un réservoir 10 à remplir.

Chaque stockage 4, 5 comprend en outre une conduite 12, 11 de soutirage de gaz respective comprenant une extrémité raccordée au stockage 4, 5 (généralement en partie supérieure) et une autre extrémité raccordée à une entrée du liquéfacteur 3 via un ensemble de vannes 14, 13 configuré pour permettre le recyclage de gaz vaporisé dans le ou les stockages 4, 5 vers le liquéfacteur 3 en vue d'une liquéfaction.

Comme décrit plus en détail dans les exemples ci-après, le stockage 4 ayant la pression la plus élevée parmi les stockages 4, 5 peut être utilisé pour transférer l'hydrogène liquide vers le réservoir 10 à remplir tandis que le stockage 5 ayant la pression la plus basse parmi les stockages 4, 5 peut être utilisé pour récupérer l'hydrogène gazeux provenant du réservoir 10 qui a été refroidi et liquéfié (dans le liquéfacteur 3).

Dans une première configuration (cf. figure 1), l'hydrogène gazeux fourni par la source 2 et liquéfié par le liquéfacteur 3 peut être distribué dans le stockage 4 et/ou le stockage 5 par exemple via une conduite 17 comprenant deux extrémités aval raccordées en parallèle respectivement aux deux stockages 4, 5 (vannes 7, 6 correspondantes ouvertes représentées en blanc).

La pression d'un premier stockage 4 est supérieure à la pression dans le second stockage 5.

Les vannes 13, 14 de sortie permettant l'évacuation de gaz par les conduites 12, 11 de soutirage de gaz sont fermées (vannes fermées représentées en noir).

De même, les vannes 20, 24 de sortie permettant l'évacuation de liquide par les conduites 8, 9 de soutirage de liquide sont fermées (vannes fermées représentées en noir).

L'hydrogène en sortie du liquéfacteur 3 est sous-refroidi afin de maintenir la pression des stockages et lutter contre leurs entrées thermiques. C'est-à-dire que le liquéfacteur 3 peut être configuré pour produire un liquide sous refroidi, c'est-à-dire à une température inférieure à la température de bulle de l'hydrogène à la pression du stockage concerné.

Alternativement ou en combinaison, un éjecteur 25 pourrait être prévu dans ou en sortie du liquéfacteur 3, le gaz sous pression prélevé dans le second stockage 5 serait utilisé dans l'éjecteur 25 et mélangé au liquide transféré dans le premier stockage 4 (cf. représentation schématique en pointillés figure 1). Ceci permet de maintenir la pression du second stockage 5 et de réduire le niveau de sous-refroidissement pour le premier stockage 4.

Lorsqu'un camion arrive à l'installation 1 pour remplissage de son réservoir 10 liquide, ce dernier est généralement partiellement vide et à une température et une pression relativement élevées (par exemple pression de 2 à 10bar et température de 100 à 25K par exemple).

Apres raccordement du réservoir 10 à l'installation 1 (aux conduites d'alimentation liquide 8, 15 et à une conduite de retour gaz 18 de l'installation), la pression dans le réservoir 10 doit être réduite en dessous de la pression du premier stockage 4 pour permettre un remplissage du réservoir 10 par équilibrage de pression à partir de ce premier stockage 4.

L'hydrogène présent dans le réservoir 10 à remplir est généralement majoritairement gazeux (de 1 à 10% de phase liquide par exemple) et à une température entre 100K et 25K.

Cette baisse de la pression peut être réalisée en transférant de l'hydrogène liquide sous refroidi dans le réservoir 10 directement à partir du liquéfacteur 3 via l'extrémité 15 de la conduite de transfert dont la vanne 16 est alors ouverte.

Cette arrivée d'hydrogène liquide (de préférence sous-refroidi) dans le réservoir 10 va y faire baisser la pression par refroidissement et condensation de l'hydrogène présent, ceci même si l'évacuation de gaz hors du réservoir fermée (vanne 19 fermée sur la conduite 18 de retour gaz 18 cf. figure 1).

Il est possible de transférer « pousser » de l'hydrogène liquide dans le réservoir 10 car la pression d'alimentation de la source 2 est de préférence supérieure à la pression régnant dans le réservoir 10 à remplir.

Cette dépressurisation du réservoir 10 sera d'autant plus rapide que l'hydrogène sortant du liquéfacteur 3 sera sous-refroidi (par exemple à une température de 21K à 15K). Le débit de liquéfaction qui n'est pas transféré dans le réservoir 10 (c'est-à-dire la portion du liquide fourni par le liquéfacteur 3 en surplus) peut être utilisé pour remplir le second stockage 5 (cf. vanne 7 correspondante ouverte comme précédemment).

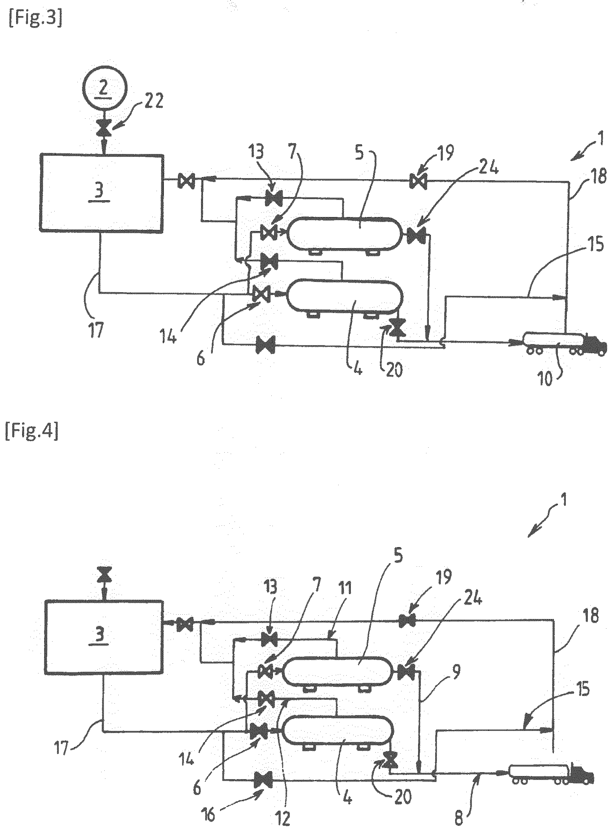

Alternativement ou cumulativement, l'étape préliminaire de dépressurisation du réservoir 10 peut comprend un transfert de gaz sous pression du réservoir 10 vers une entrée du liquéfacteur 3 (cf. figure 3 via l'ouverture de la vanne 19 sur la conduite 18 de retour gaz 18). Simultanément, le liquéfacteur 3 peut alimenter en liquide le premier stockage 4 et/ou le second stockage 5 (cf. figure 3, vannes 6, 7 ouvertes).

Alternativement ou cumulativement, l'étape préliminaire de dépressurisation du réservoir 10 comprend un transfert de gaz sous pression du réservoir 10 vers une entrée du premier stockage 4 (cf. figure 4, via l'ouverture de la vanne 20 sur la conduite 8 d'alimentation liquide). Simultanément, la vanne 6 située entre la sortie du liquéfacteur 3 et l'entrée du premier stockage 4 est fermée tandis que la vanne 14 située entre une sortie gazeuse du premier stockage 4 et une entrée du liquéfacteur 3 est ouverte. De plus, le liquide fourni par le liquéfacteur 3 peut être utilisé pour remplir le second stockage 5 (cf. vanne 7 correspondante ouverte comme précédemment).

Lorsque le réservoir 10 a atteint une pression inférieure à la pression du premier stockage 4, le niveau de liquide dans le réservoir 10 se situe généralement entre 10% et 50% de sa capacité maximale (variable selon les conditions initiales du réservoir 10).

Dans une séquence possible, il peut y avoir en premier lieu remplissage (sous-refroidi) du réservoir 10 à partir du liquéfacteur 3 (pour commencer à faire chuter la pression et refroidir les vapeurs dans le réservoir 10) puis dépressurisation du réservoir 10 vers une entrée du liquéfacteur 3 avec renvoi de liquide du liquéfacteur 3 vers le stockage 4 et/ou le stockage 5 jusqu'à atteindre dans le réservoir 10 une première pression P1 supérieure à la pression du stockage 4 ayant la pression la plus élevée.

Une dépressurisation du réservoir 10 peut ensuite être réalisée vers le liquéfacteur 3 avec renvoi du liquide du liquéfacteur 3 vers le stockage 5 à la pression la moins élevée jusqu'à atteindre dans le réservoir 10 une pression P2 comprise entre les pressions des deux stockages 4 et 5.

A l'issue de cette dépressurisation le niveau de liquide dans le réservoir 10 se situe également entre 10 et 50% de sa capacité maximale.

La phase principale de remplissage du réservoir 10 peut alors avoir lieu.

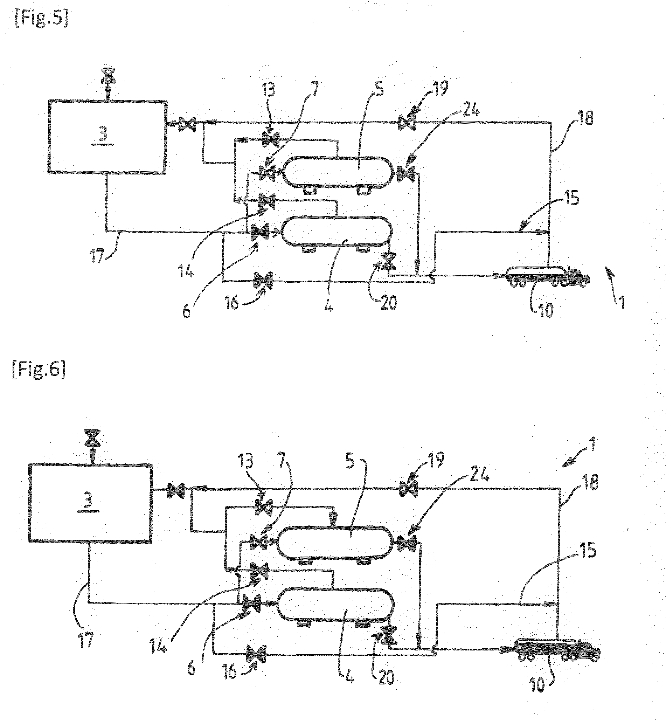

Comme illustré à la figure 5, de l'hydrogène liquide peut alors être transféré du premier stockage 4 vers le réservoir 10 par la conduite 8 de soutirage de liquide les reliant (vanne 20 correspondante ouverte) au moyen du différentiel de pression (les autres vannes 14 6 d'accès au premier stockage 4 sont fermées).

Les éventuelles vapeurs sortant du réservoir 10 (par exemple à une température entre 100K et 23K) peuvent éventuellement être récupérées par la conduite 18 de retour de gaz (vanne 19 ouverte notamment) reliant le réservoir 10 à l'entrée du liquéfacteur 3.

Ce gaz chaud est ainsi liquéfié et le liquide obtenu peut être transféré dans le second stockage 5 via la conduite et la vanne 7 correspondante ouverte.

Il est par ailleurs possible de continuer à liquéfier de l'hydrogène fourni par la source 2. Dans ce cas, le liquide sera de préférence produit/détendu dans le liquéfacteur 3 à une pression intermédiaire entre la pression du réservoir 10 et la pression du second stockage 5, pour permettre son transfert dans le second stockage 5 par le différentiel de pression (via la conduite 17 de transfert et l'ouverture de la vanne 7 correspondante.

Comme précédemment (cf. figure 1), alternativement il est possible de prévoir éjecteur en sortie de liquéfacteur 3 qui est alimenté cette fois par le gaz sous pression provenant du réservoir 10 afin de réduire plus rapidement la pression du réservoir 10 et d'accélérer son remplissage en liquide.

Lorsque la quantité voulue de liquide a été transférée dans le réservoir (réservoir 10 ayant atteint son seuil de remplissage déterminé), le réservoir 10 peut être ensuite dépressurisé à la pression du second stockage 5 (ou en-dessous).

Après le remplissage ci-dessus, la pression dans le réservoir 10 est généralement proche de la pression dans le premier stockage 4. Le niveau de remplissage du réservoir 10 est par exemple compris entre 50% et 95%. Sa pression doit cependant être réduite pour pouvoir prendre la route et ne pas perdre d'hydrogène pendant le trajet.

Cette pression de route est variable selon les règlementations locales.

La connexion du réservoir 10 (sa sortie de vapeur) au second stockage 5 via les conduites 18 de retour de gaz et la conduite 11 de soutirage de gaz (vannes 19 et 13 correspondantes ouvertes) permet de décharger de la vapeur du réservoir 10 vers le second stockage 5. Ceci permet d'équilibrer les pressions du réservoir 10 et du second stockage 5 à une pression proche de la pression du second stockage 5 (à une pression proche et non égale car du liquide sous-refroidi arrive dans le second stockage 5 du liquéfacteur 3 et en raison de la différence de taille entre le réservoir 10 et le stockage 5).

En variante ou en combinaison, il est également possible de renvoyer les vapeurs du réservoir 10 camions au liquéfacteur 3 via un éjecteur au niveau de la source 2 et aspirant le gaz lors de la détente du gaz dans le liquéfacteur 3.

Après cette dépressurisation le réservoir 10 a une pression proche de la pression dans le second stockage 5.

Si cette pression est compatible avec la pression de route requise, le camion peut se déconnecter de l'installation 1 et repartir transporter l'hydrogène liquide à destination. Le système revient à la première configuration de départ.

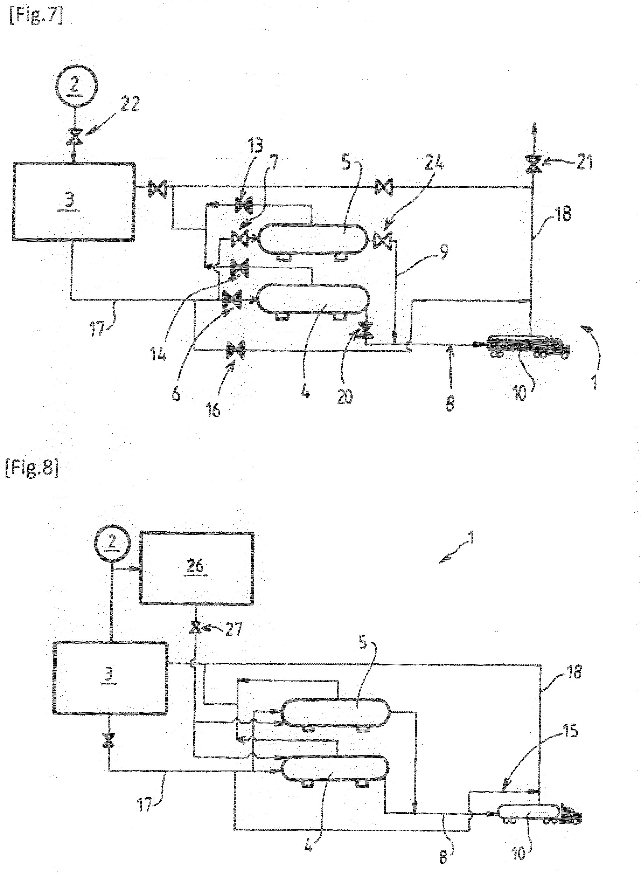

Si en revanche la pression dans le réservoir 10 est toujours trop élevée pour prendre la route (par rapport aux exigences réglementaires), une dépressurisation supplémentaire est possible, par exemple vers un évent (cf. référence 21 figure 7) et/ou vers un système de récupération d'hydrogène.

Sinon, la fin du remplissage peut aussi être réalisée via le second stockage 5 au moyen de la conduite 9 correspondante. La pression dans le réservoir 10 est alors réduite via la récupération des vapeurs vers le liquéfacteur (via la conduite 18 de retour de gaz et sa vanne 19 ouverte (et/ou via un éjecteur prélevant les vapeurs du stockage vers la source 2).

Dans le cas où la source 2 n'est pas disponible (par exemple une vanne 22 située entre la source 2 et le liquéfacteur 3 est fermée).

Dans ce cas, lorsqu'il n'y a pas de réservoir 10 à remplir (selon la configuration de la figure 1) mais les pressions des deux stockages 4, 5 doivent être maintenues en cas d'arrivée d'un réservoir 10 à remplir.

Dans ce cas, le liquéfacteur 3 peut utiliser sa capacité frigorifique de liquéfaction pour condenser et/ou sous-refroidir des vapeurs des stockages 4, 5.

Ainsi, par exemple, lorsque la pression monte dans le premier stockage 4 (à cause des entrées thermiques qui évaporent du liquide), le gaz produit peut être transféré dans le liquéfacteur 3 via la conduite 12 de soutirage de gaz (vanne(s) 14 correspondantes ouvertes). Le gaz liquéfié et sous-refroidi peut être alors transféré dans le second stockage 5 à plus basse pression (via la conduite 17 et la vanne 7 correspondante).

Le sous-refroidissement de l'hydrogène (par exemple jusqu'à 15K) permet d'éviter une montée en pression dans ce second stockage 5 malgré les entrées thermiques.

Lorsque la source 2 n'est pas disponible (vanne 22 fermée par exemple) et qu'un réservoir 10 est raccordé à l'installation et doit être dépressurisé, la pression dans le réservoir 10 peut être réduite en dessous de la pression dans le premier stockage 4 pour permettre sont remplissage à partir de ce stockage 4.

L'hydrogène présent dans le réservoir 10 à remplir est majoritairement gazeux (de 1 à 10% de phase liquide par exemple) et à une température par exemple entre 100K et 25K. En connectant la sortie gazeuse du réservoir 10 au liquéfacteur 3 (conduite 18 de retour de gaz via la vanne 19 ouverte), cela permet de liquéfier l'hydrogène gazeux provenant du réservoir 10. Cet hydrogène liquéfié peut être transféré dans le premier stockage 4 et/ou au second stockage 5 en fonction de la pression dans le réservoir 10. A la fin de cette étape, le réservoir 10 est à une pression inférieure à la pression du premier stockage 4 permettant son remplissage par ce stockage 4 comme précédemment décrit).

Dans une variante de réalisation possible l'installation comprend plus de deux stockages pouvant avoir des pressions de stockages respectives déterminées distinctes.

Dans une variante de réalisation représenté à la figure 8, l'installation 1 peut comporter deux liquéfacteurs 3, 26. La figure 8 a été simplifiée par rapport aux figures précédentes (même architecture mais toutes vannes précédentes ne sont pas représentées à la figure 8).

Cette variante est avantageuse notamment lors de forte variations de la demande d'hydrogène lorsque la flexibilité d'un seul liquéfacteur peut devenir pénalisante.

En particulier, le second liquéfacteur 26 (ou liquéfacteur supplémentaire par rapport à la solution ci-dessus) est alimenté également par la source 2. De plus ce liquéfacteur 26 supplémentaire peut également posséder une sortie de liquide reliée à chacun des deux stockages 4, 5 (par exemple via une conduite comprenant deux extrémités aval reliée en parallèles respectivement à deux entrées des stockages 4, 5).

De préférence les deux liquéfacteurs 3, 26 sont de tailles différentes. De plus, comme illustré à la figure 8, de préférence seul l'un (le premier) liquéfacteur 3 est configuré pour récupérer les vapeurs de l'installation. L'autre liquéfacteur supplémentaire produit du liquide uniquement à parti du gaz fourni par la source 2.

Ce liquéfacteur 26 supplémentaire permettra de reprendre la gestion des vapeurs des stockages 4, 5 et du réservoir 10. Les étapes de refroidissement/remplissages peuvent être semblables à celles décrites ci-dessus avec la différence que le liquéfacteur 26 supplémentaire peut fournir de l'hydrogène liquide également dans le ou les stockages 4, 5 si besoin.

Eventuellement, de l'hydrogène basse pression du premier liquéfacteur 3 pourrait être renvoyé le second liquéfacteur 26 afin de récupérer les frigories disponibles pour liquéfier le gaz fourni par la source (ou des vapeurs à plus haute pression). De même il peut être envisageable de prévoir la possibilité que le second liquéfacteur 26 récupère des vapeurs réchauffées en vue de les liquéfier.

Ainsi tout ou partie des processus ci-dessus assurés par un seul liquéfacteur 3 peuvent être assurées par un des deux ou les deux liquéfacteurs 3, 26.

De plus, le système peut être configuré pour remplir plusieurs réservoirs 10. Dans ce cas on peut prévoir autant d'extrémités et de vannes 20, 24, 16, 19 que de réservoirs à remplir (notamment simultanément).

## Revendications

1. Installation de stockage et de distribution d'hydrogène liquéfié comprenant une source (2) d'hydrogène gazeux, un liquéfacteur (3), deux stockages (4, 5) d'hydrogène liquide à des pressions de stockage respectives déterminées, le liquéfacteur (3) comprenant une entrée raccordée à la source (2) et une sortie raccordée en parallèle, via un ensemble de vanne (7, 6, 16), à une entrée respective de chaque stockages (5, 4), chaque stockage (5, 4) comprenant une conduite (9, 8) de soutirage de liquide respective comprenant une extrémité raccordée au stockage (4, 5) et au moins une autre extrémité destinée à être raccordée à un au moins un réservoir (10) à remplir, **caractérisée en ce que** la sortie du liquéfacteur (3) est raccordée également à une extrémité (15) de raccordement destinée à être raccordée de façon amovible à un réservoir (10) à remplir, et **en ce que** chaque stockage (4, 5) comprend en outre une conduite (12, 11) de soutirage de gaz respective comprenant une extrémité raccordée au stockage (4, 5) et une autre extrémité raccordée à une entrée du liquéfacteur (3) via un ensemble de vannes (14, 13) configuré pour permettre le recyclage de gaz vers le liquéfacteur (3) en vue d'une liquéfaction.

2. Installation selon la revendication 1, **caractérisée en ce que** les deux stockages (4, 5) d'hydrogène liquide sont maintenus à des pressions de stockage respectives déterminées distinctes.

3. Installation selon la revendication 1 ou 2, **caractérisée en ce qu'**elle comprend un second liquéfacteur (26) comprenant une entrée raccordée à la source (2) et une sortie raccordée en parallèle, via un ensemble de vanne (27) à une entrée respective de chaque stockage (4, 5).

4. Procédé remplissage d'un réservoir (10) d'hydrogène liquide, notamment un réservoir mobile d'une semi-remorque, au moyen d'une installation (1) conforme à l'une quelconque des revendications 1 à 3, **caractérisé en ce qu'**il comporte une étape préliminaire de dépressurisation du réservoir (10) à remplir à une pression inférieure à la pression du stockage (4) ayant la pression la plus élevée parmi les deux stockages (4, 5).

5. Procédé selon la revendication 4, **caractérisé en ce que** l'étape préliminaire de dépressurisation comprend un transfert d'une première quantité d'hydrogène liquide dans le réservoir (10) directement à partir du liquéfacteur (3).

6. Procédé selon l'une quelconque des revendications 4 ou 5, **caractérisé en ce que** l'étape préliminaire de dépressurisation comprend un transfert de gaz sous pression du réservoir (10) vers une entrée du liquéfacteur (3) et/ou vers une entrée de l'un au moins des stockages (4, 5).

7. Procédé selon l'une quelconque des revendication 4 à 6, **caractérisé en ce qu'**il comprend, simultanément à l'étape préliminaire de dépressurisation, une étape de transfert d'hydrogène liquide dans l'un au moins des stockage (4, 5) à partir du liquéfacteur (3).

8. Procédé selon l'une quelconque des revendications 4 à 7, **caractérisé en ce qu'**il comprend une première étape de remplissage comprenant un transfert d'hydrogène liquide dans le réservoir (10) par différentiel de pression à partir du stockage (4) ayant la pression la plus élevée parmi les deux stockages (4, 5).

9. Procédé selon la revendication 8, **caractérisé en ce qu'**il comprend, simultanément à la première étape de remplissage, une étape de transfert d'hydrogène gazeux du réservoir (10) vers une entrée du liquéfacteur (3) et sa liquéfaction.

10. Procédé selon la revendication 8 ou 9, **caractérisé en ce qu'**il comprend, simultanément à la première étape de remplissage, une étape de transfert d'hydrogène liquide à partir du liquéfacteur (3) dans le stockage (5) ayant la pression la moins élevée parmi les deux stockages (4, 5).

11. Procédé selon la revendication 8 à 10, **caractérisé en ce qu'**il comprend, après la première étape de remplissage, une étape de dépressurisation du réservoir (10) à la pression du stockage (5) ayant la pression la moins élevée parmi les deux stockages (4, 5), l'étape de dépressurisation comprenant un équilibrage de pression entre le réservoir (10) et ledit stockage (5) ayant la pression la moins élevée parmi les deux stockages (4, 5).

12. Procédé selon la revendication 11, **caractérisé en ce qu'**il comprend, simultanément à l'étape de dépressurisation du réservoir (10) à la pression du stockage (5) ayant la pression la moins élevée parmi les deux stockages (4, 5), une étape de transfert d'hydrogène liquide du liquéfacteur (3) vers ledit stockage (5) ayant la pression la moins élevée parmi les deux stockages (4, 5).

13. Procédé selon la revendication 12, **caractérisé en ce qu'**il comprend, après l'étape de dépressurisation du réservoir (10) à la pression du stockage (5) ayant la pression la moins élevée parmi les deux stockages (4, 5), une étape de dépressurisation supplémentaire du réservoir (10) à une pression inférieure à la pression ladite moins élevée parmi les deux stockages (4, 5), l'étape de dépressurisation supplémentaire comprenant un transfert de gaz du réservoir (10) vers une entrée du liquéfacteur (3) et/ou une évacuation vers l'atmosphère et/ou un organe de collecte de gaz.

14. Procédé selon l'une quelconque des revendications 4 à 13, **caractérisé en ce qu'**il utilise deux liquéfacteurs (3, 26) distincts.

## Patentansprüche

1. Anlage zum Speichern und Abgeben von verflüssigtem Wasserstoff, die eine Quelle (2) für gasförmigen Wasserstoff, einen Verflüssiger (3) und zwei Speicher (4, 5) für flüssigen Wasserstoff bei jeweiligen festgelegten Speicherdrücken umfasst, wobei der Verflüssiger (3) einen mit der Quelle (2) verbundenen Einlass und einen Auslass umfasst, der über eine Ventilanordnung (7, 6, 16) parallel mit einem jeweiligen Einlass jedes Speichers (5, 4) verbunden ist, wobei jeder Speicher (5, 4) eine jeweilige Flüssigkeitsentnahmeleitung (9, 8) umfasst, die ein Ende umfasst, das mit dem Speicher (4, 5) verbunden ist, und mindestens ein weiteres Ende, das mit mindestens einem zu befüllenden Behälter (10) verbunden werden soll, **dadurch gekennzeichnet, dass** der Auslass des Verflüssigers (3) ebenso mit einem Anschlussende (15) verbunden ist, das beweglich mit einem zu befüllenden Behälter (10) verbunden werden soll, und dadurch, dass jeder Speicher (4, 5) ferner eine jeweilige Gasentnahmeleitung (12, 11) umfasst, die ein Ende umfasst, das mit dem Speicher (4, 5) verbunden ist, und ein weiteres Ende, das mit einem Einlass des Verflüssigers (3) über eine Ventilanordnung (14, 13) verbunden ist, die so eingerichtet ist, dass sie das Zurückführen des Gases zum Verflüssiger (3) zwecks Verflüssigung ermöglicht.

2. Anlage nach Anspruch 1, **dadurch gekennzeichnet, dass** die beiden Speicher (4, 5) für flüssigen Wasserstoff auf unterschiedlichen festgelegten jeweiligen Speicherdrücken gehalten werden.

3. Anlage nach Anspruch 1 oder 2, **dadurch gekennzeichnet, dass** sie einen zweiten Verflüssiger (26) umfasst, der einen mit der Quelle (2) verbundenen Einlass und einen parallel dazu über eine Ventilanordnung (27) mit einem jeweiligen Einlass jedes Speichers (4, 5) verbundenen Auslass umfasst.

4. Verfahren zum Befüllen eines Behälters (10) für flüssigen Wasserstoff, insbesondere eines beweglichen Behälters eines Aufliegers, mithilfe einer Anlage (1) nach einem der Ansprüche 1 bis 3, **dadurch gekennzeichnet, dass** es einen vorbereitenden Schritt zur Absenkung des Drucks des zu befüllenden Behälters (10) auf einen Druck unter dem Druck des Speichers (4) umfasst, der von den beiden Speichern (4, 5) den höchsten Druck aufweist.

5. Verfahren nach Anspruch 4, **dadurch gekennzeichnet, dass** der vorbereitende Schritt zur Druckabsenkung ein Leiten einer ersten Menge flüssigen Wasserstoffs direkt aus dem Verflüssiger (3) in den Behälter (10) umfasst.

6. Verfahren nach Anspruch 4 oder 5, **dadurch gekennzeichnet, dass** der vorbereitende Schritt zur Druckabsenkung ein Leiten von Druckgas aus dem Behälter (10) zu einem Einlass des Verflüssigers (3) und/oder zu einem Einlass von mindestens einem der Speicher (4, 5) umfasst.

7. Verfahren nach einem der Ansprüche 4 bis 6, **dadurch gekennzeichnet, dass** es zur selben Zeit wie der vorbereitende Schritt zur Druckabsenkung einen Schritt zum Leiten von flüssigem Wasserstoff aus dem Verflüssiger (3) in mindestens einen der Speicher (4, 5) umfasst.

8. Verfahren nach einem der Ansprüche 4 bis 7, **dadurch gekennzeichnet, dass** es einen ersten Schritt zum Befüllen umfasst, der ein Leiten von flüssigem Wasserstoff in den Behälter (10) mittels Druckdifferenz von dem Behälter (4) aus umfasst, der von den beiden Speichern (4, 5) den höchsten Druck aufweist.

9. Verfahren nach Anspruch 8, **dadurch gekennzeichnet, dass** es zur selben Zeit wie der erste Schritt zum Befüllen einen Schritt zum Leiten von gasförmigem Wasserstoff aus dem Behälter (10) zu einem Einlass des Verflüssigers (3) und zum Verflüssigen desselben umfasst.

10. Verfahren nach Anspruch 8 oder 9, **dadurch gekennzeichnet, dass** es zur selben Zeit wie der erste Schritt zum Befüllen einen Schritt zum Leiten von flüssigem Wasserstoff aus dem Verflüssiger (3) in den Speicher (5) umfasst, der von den beiden Speichern (4, 5) den geringsten Druck aufweist.

11. Verfahren nach Anspruch 8 bis 10, **dadurch gekennzeichnet, dass** es nach dem ersten Schritt zum Befüllen einen Schritt zur Absenkung des Drucks des Behälters (10) auf den Druck des Speichers (5) umfasst, der von den beiden Speichern (4, 5) den geringsten Druck aufweist, wobei der Schritt zur Druckabsenkung einen Druckausgleich zwischen dem Behälter (10) und dem Speicher (5) umfasst, der von den beiden Speichern (4, 5) den geringsten Druck aufweist.

12. Verfahren nach Anspruch 11, **dadurch gekennzeichnet, dass** es zur selben Zeit wie der Schritt zur Absenkung des Drucks des Behälters (10) auf den Druck des Speichers (5), der von den beiden Speichern (4, 5) den geringsten Druck aufweist, einen Schritt zum Leiten von flüssigem Wasserstoff aus dem Verflüssiger (3) zu dem Speicher (5) umfasst, der von den beiden Speichern (4, 5) den geringsten Druck aufweist.

13. Verfahren nach Anspruch 12, **dadurch gekennzeichnet, dass** es nach dem Schritt zur Absenkung des Drucks des Behälters (10) auf den Druck des Speichers (5), der von den beiden Speichern (4, 5) den geringsten Druck aufweist, einen Schritt zur zusätzlichen Absenkung des Drucks des Behälters (10) auf einen Druck unter dem geringsten Druck von den beiden Speichern (4, 5) umfasst, wobei der Schritt zur zusätzlichen Absenkung des Drucks ein Leiten von Gas aus dem Behälter (10) in Richtung eines Einlasses des Verflüssigers (3) und/oder ein Abführen an die Umgebung und/oder ein Gassammelelement umfasst.

14. Verfahren nach einem der Ansprüche 4 bis 13, **dadurch gekennzeichnet, dass** darin zwei verschiedene Verflüssiger (3, 26) verwendet werden.

## Claims

1. Installation for storing and dispensing liquefied hydrogen, comprising a source (2) of gaseous hydrogen, a liquefier (3), two storage reservoirs (4, 5) for liquid hydrogen at determined respective storage pressures, the liquefier (3) comprising an inlet connected to the source (2) and an outlet connected in parallel, via a set of valves (7, 6, 16), to a respective inlet of each storage reservoir (5, 4), each storage reservoir (5, 4) comprising a respective liquid withdrawing pipe (9, 8) comprising an end connected to the storage reservoir (4, 5) and at least one other end intended to be connected to at least one tank (10) that is to be filled, **characterized in that** the outlet of the liquefier (3) is also connected to a connection end (15) intended to be connected removably to a tank (10) that is to be filled, and **in that** each storage reservoir (4, 5) further comprises a respective gas withdrawing pipe (12, 11) comprising an end connected to the storage reservoir (4, 5) and another end connected to an inlet of the liquefier (3) via a set of valves (14, 13) which is configured to allow gas to be recirculated to the liquefier (3) so that it can be liquefied.

2. Installation according to Claim 1, **characterized in that** the two liquid-hydrogen storage reservoirs (4, 5) are kept at distinct determined respective storage pressures.

3. Installation according to Claim 1 or 2, **characterized in that** it comprises a second liquefier (26) comprising an inlet connected to the source (2) and an outlet connected in parallel, via a set of valves (27), to a respective inlet of each storage reservoir (4, 5).

4. Method for filling a liquid hydrogen tank (10), notably a mobile tank of a semitrailer, using an installation (1) according to any one of Claims 1 to 3, **characterized in that** it comprises a preliminary step of depressurizing the tank (10) that is to be filled to a pressure below the pressure of that one (4) of the two storage reservoirs (4, 5) that is at the higher of the two pressures.

5. Method according to Claim 4, **characterized in that** the preliminary depressurization step comprises a transfer of a first quantity of liquid hydrogen into the tank (10) directly from the liquefier (3).

6. Method according to either one of Claims 4 and 5, **characterized in that** the preliminary depressurization step comprises a transfer of pressurized gas from the tank (10) to one inlet of the liquefier (3) and/or to one inlet of at least one of the storage reservoirs (4, 5).

7. Method according to any one of Claims 4 to 6, **characterized in that** it comprises, simultaneously with the preliminary depressurization step, a step of transferring liquid hydrogen into at least one of the storage reservoirs (4, 5) from the liquefier (3).

8. Method according to any one of Claims 4 to 7, **characterized in that** it comprises a first filling step involving transferring liquid hydrogen, using the pressure differential, to the tank (10) from that one (4) of the two storage reservoirs (4, 5) that is at the higher of the two pressures.

9. Method according to Claim 8, **characterized in that** it comprises, simultaneously with the first filling step, a step of transferring gaseous hydrogen from the tank (10) to an inlet of the liquefier (3) and liquefying it.

10. Method according to Claim 8 or 9, **characterized in that** it comprises, simultaneously with the first filling step, a step of transferring liquid hydrogen from the liquefier (3) to that one (5) of the two storage reservoirs (4, 5) that is at the lower of the two pressures.

11. Method according to Claim 8 to 10, **characterized in that** it comprises, after the first filling step, a step of depressurizing the tank (10) to the pressure of that one (5) of the two storage reservoirs (4, 5) that is at the lower of the two pressures, the depressurization step involving an equalizing of pressures between the tank (10) and the said one (5) of the two storage reservoirs (4, 5) that is at the lower of the two pressures.

12. Method according to Claim 11, **characterized in that** it comprises, simultaneously with the step of depressurizing the tank (10) to the pressure of that one (5) of the two storage reservoirs (4, 5) that is at the lower of the two pressures, a step of transferring liquid hydrogen from the liquefier (3) to the said one (5) of the two storage reservoirs (4, 5) that is at the lower of the two pressures.

13. Method according to Claim 12, **characterized in that** it comprises, after the step of depressurizing the tank (10) to the pressure of that one (5) of the two storage reservoirs (4, 5) that is at the lower of the two pressures, a step of further depressurizing the tank (10) to a pressure below the pressure of that one of the two storage reservoirs (4, 5) that is at the lower of the two pressures, the further depressurization step comprising a transfer of gas from the tank (10) to an inlet of the liquefier (3) and/or a discharging of gas to the atmosphere and/or a gas collection member.

14. Method according to any one of Claims 4 to 13, **characterized in that** it uses two distinct liquefiers (3, 26) .
